# EUROPEAN PATENT APPLICATION

(11) **EP 1 727 353 A1**
(43) Date of publication of application: **29.11.2006**
(21) Application number: 06114530.6
(22) Date of filing: 24.05.2006
(51) Int. Cl.: H04N 1/52, G03G 15/01

(54) **Printing method and apparatus**

(30) Priority: 26.05.2005 KR 2005044501
(71) Applicant: Samsung Electronics Co., Ltd, Suwon-si, Gyeonggi-do 442-742 (KR)
(72) Inventor: PARK, Sun-ju, Ilsan Dong-gu, Goyang-si Gyeonggi-do (KR); GAHANG, Goo-soo, Suji-gu, Yongin-si, Gyeonggi-do, (KR); KIM, Sang-ho, Yeongtong-dong,Yeongtong-gu, Gyeonggi-do (KR); KIM, Kyeong-man, Giheung-gu, Yongin-si, Gyeonggi-do (KR); OH, Hyun-soo, -dong,Yeongtong-gu,Suwon-si, Gyeonggi-do (KR); JANG, Mi-jung, -dong,Yeongtong-gu,Suwon-si, Gyeonggi-do (KR)
(74) Representative: Walaski, Jan Filip

(57) **Abstract**

A method and apparatus is provided for processing halftone images by generating a first dot pattern corresponding to a first colour and a second dot pattern corresponding to a second colour for a video signal having at least two colours. The method includes generating the first dot pattern by halftone processing the video signal using a first screen (52), and generating the second dot pattern by halftone processing the video signal using a second screen (54), which has a complementary relationship relative to the first screen (52).

## Description

The present invention relates to a printer, particularly but not exclusively to a printer adopting a tri-level developing method by which two types of positive and negative electrostatic latent images are developed by one-time exposure. More particularly, the present invention relates to a method for improving image quality by preventing dot patterns for the two types of electrostatic latent images from overlapping each other.

Printers are one of the fundamental devices for outputting images, and find uses in multi-functional devices such as facsimile machines, cash register machines, and automated teller machines (ATMs).

A daisy wheel printer, a dot pin printer, an inkjet printer, and a laser printer have been developed so far. In particular, the inkjet printer and the laser printer are most popular in mid-range priced printers. The laser printer includes elements such as toner, light (laser or an LED array), static electricity, heat, and pressure for printing. Using static electricity is the core feature of the laser printer.

The laser printer forms an electrostatic latent image with every exposure. Generally, a colour printer produces a colour image constituted by four kinds of colours of cyan (C), magenta (M), yellow (Y), and black (K). An input colour image is decomposed into one of four colour signals of C, M, Y, and K. The laser printer forms respective electrostatic latent images according to respective colours, develops respective toners relative to respective electrostatic latent images and sequentially transfers the developed toners to a print paper, thus forming a colour image.

The electrostatic latent image is typically formed on the outer surface of a drum with a negative charge while the toner is charged with a positive charge. As a result, the positively charged toner adheres to the negatively charged electrostatic latent image.

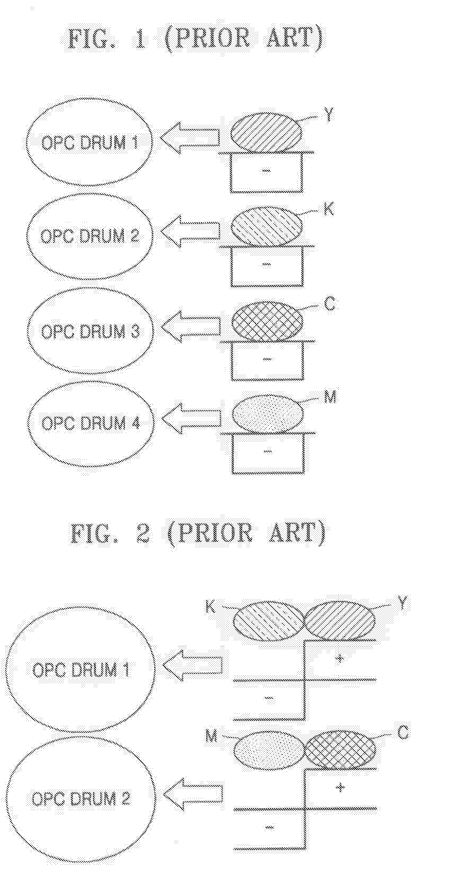

Figure 1 shows a conventional bi-level development method. Referring to Figure 1, in the conventional development method, each drum corresponds to a different colour - C, M, Y, and K. The drum is charged (on) or not with a negative charge according to the presence of a corresponding colour, that is, the development of the drum is represented with a bi-level of on and off.

Recently, a tri-level development method has been suggested which can develop two colours on a single drum. U.S. Patent Nos. 5,884,119, 5,557,393, 5,893,664 and Japanese Patent Publication No. 2000-298390 disclose the tri-level development method.

Figure 2 shows a conventional tri-level development method. Referring to Figure 2, the tri-level development method develops electrostatic latent images of two colours on a drum by one-time exposure. Both positive and negative electrostatic latent images are formed on the drum by one-time exposure. The positive electrostatic latent image corresponds to one colour while the negative electrostatic latent image corresponds to another colour. As a whole, the positive electrostatic latent image and the negative electrostatic latent image are present on the drum by being mixed with each other. The toner of a corresponding colour is developed on each electrostatic latent image. The drum is charged to tri-levels, including a positive level corresponding to the presence of the first colour, a negative level corresponding to the presence of the second colour, and a null level corresponding to an absence of both of the first and second colours.

In the tri-level development method, two development systems are used to represent the four colours of C, M, Y, and K. Each development system develops two colours at one-time by using positive and negative toners.

Referring to Figure 2, Y and K are developed by drum 1, while C and M are developed by drum 2. According to the tri-level development method, since two colours can be simultaneously printed with a single drum, a printer can be compact and lightweight and the printing speed increased compared to the bi-level development method.

Since the positive charge state does not coincide with the negative charge state at a certain position on the drum, the first and second colours do not overlap each other at any position. Referring to Figure 2, Y and K, as well as C and M, cannot be printed to overlap each other. Due to this effect, colour reproduction of the tri-level development method exhibits lower colour saturation than the bi-level development method. A graphic display interface of a printer converts the colour information of a pixel into a dot pattern (halftone processing) and transmits the dot pattern to a print engine. Smooth colour representation and reduction of visual awkwardness are available by adjusting the size and angle of a screen used for the halftone processing.

However, when the results of the conversion of the colour information of a pixel into a dot pattern using the screen are output through the tri-level development method, the colour information of the pixel is diminished due to the loss of overlapped information associated with the tri-level development method.

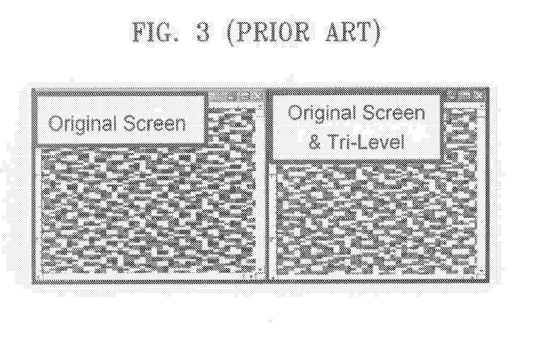

Figure 3 shows an image that is halftone processed according to the conventional halftone processing method and an image that is obtained by printing the halftone processed image using the tri-level development method. The left image in Figure 3 is the halftone-processed image and the right image is the image in which the halftone-processed image is printed using the tri-level development method. Referring to Figure 3, patterns, which have not existed in the halftone-processed image, are generated in the image printed using the tri-level development method. Thus, as can be seen, the image quality is greatly deteriorated.

To solve the above and other problems, aspects of the present invention provide a method of processing halftone images using a tri-level development method, which can prevent deterioration of image quality.

One exemplary embodiment of the present invention provides a printing method, which can prevent deterioration of the image quality.

Another exemplary embodiment of the present invention provides a computer-readable medium for recording the halftone processing method.

According to an aspect of the present invention, a method of processing halftone by generating a first dot pattern corresponding to a first colour and a second dot pattern corresponding to a second colour for a video signal having at least two colours is provided. The method comprises generating the first dot pattern by applying halftone processing to the video signal using a first screen, and generating the second dot pattern by applying halftone processing to the video signal using a second screen, the second screen being a complement of the first screen.

The size of the first and second screens are the same as m×n, and the threshold values of corresponding positions between the first and second screens are complements of each other, each comprising a representative level.

According to another aspect of the present invention, a method is provided of printing a video signal having at least two colours. The method comprises generating a first dot pattern by applying halftone processing to the video signal using a first screen, generating a second dot pattern by applying halftone processing to the video signal using a second screen, the second screen being a complement of the first screen, and printing the first and second dot patterns using a tri-level development method.

According to yet another aspect of the present invention, a computer-readable medium having stored thereon instructions comprising a program for causing a computer to perform a method of processing halftone by generating a first dot pattern corresponding to a first colour and a second dot pattern corresponding to a second colour for a video signal having at least two colours is provided. The instructions comprise generating the first dot pattern by applying halftone processing to the video signal using a first screen, and generating the second dot pattern by applying halftone processing to the video signal using a second screen, the second screen being a complement of the first screen.

According to yet another aspect of the present invention, there is provided an image forming apparatus configured to process halftone images for a video signal having at least two colours. The image forming apparatus comprises an interface for coupling signals to the image forming apparatus, and a control portion for conducting communications via the interface and controlling the image forming apparatus. The image forming apparatus further comprising a memory for storing information comprising print data and setting commands, an I/O interface, an operation panel for inputting various commands and data, the operation panel being coupled to the control portion through the I/O interface; and a print engine responsive to commands from the control portion, being coupled thereto via the I/O interface. The image forming apparatus being configured to generate a first dot pattern by applying halftone processing to the video signal using a first screen, the first dot pattern corresponding to a first colour, and generate a second dot pattern by applying halftone processing to the video signal using a second screen, the second dot pattern corresponding to a second colour, the first and second screens having a complementary relationship.

According to yet another aspect of the present invention, there is provided a method of printing an image, comprising generating a halftone image from a video signal in which the halftone image contains first and second colour information representing first and second colours in which the first and second colour information does not overlap, and printing the image by applying a tri-development printing method to the generated halftone image.

The above aspects, features and advantages of the present invention will become more apparent by describing in detail certain embodiments thereof with reference to the accompanying drawings, in which:
Figure 1 is a view showing a conventional bi-level development method;
Figure 2 is a view showing a conventional tri-level development method;
Figure 3 shows an image that is halftone processed according to the conventional halftone processing method and an image that is obtained by printing the halftone processed image using a tri-level development method;
Figure 4 is a flow chart illustrating a printing method according to an exemplary embodiment of the present invention;
Figure 5 is a view showing the first and second screens using the halftone processing method of Figure 4;
Figure 6 shows an image that is halftone processed using the screen according to an exemplary embodiment of the present invention and an image that is obtained by printing the halftone processed image using a tri-level development method;
Figure 7 is a view showing the physical construction of a tri-level development type laser printer employing a halftone processing method according to an exemplary embodiment of the present invention; and
Figure 8 is a block diagram of the construction of the printer of Figure 7.

Throughout the drawings, like reference numbers should be understood to refer to like elements, features, and structures.

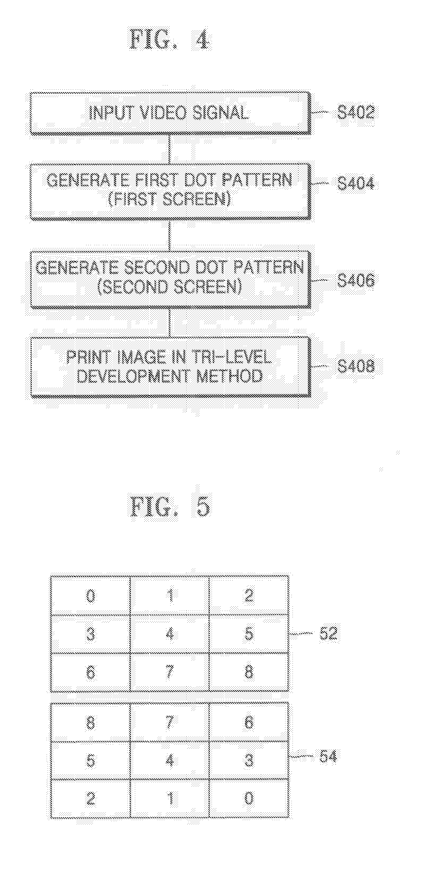

Figure 4 is a flow chart for explaining a printing method according to an exemplary embodiment of the present invention. Referring to Figure 4, in a printing method according to an exemplary embodiment of the present invention, a video signal is input (S402). The video signal can comprise information concerning two colours, for example, Y and K or C and M. Also, the video signal input to the printer can comprise information concerning all four colours. However, in this description, it is assumed that the video signal includes two colours for the convenience of explanation. This assumption is useful because the two colours are developed through the same development system.

The video signal is halftone processed using a first screen (not shown) to obtain a dot pattern of the first colour (S404). Since the halftone processing of video signal or pixel information is well known to those of ordinary skill in the art, a detailed description thereof will be omitted. Next, a dot pattern of a second colour is obtained by halftone processing the video signal using a second screen (not shown) (S406). Here, the first screen and the second screen have a complementary relationship. That is, the second screen is obtained by taking a complement of the first screen. For example, in a colour system having eight levels, 0-7, 0 is the complement of 8, 1 is the complement of 7, 2 is the complement of 6, 3 is the complement of 5, and 4 is its own complement, and vice versa. The first dot pattern and the second dot pattern are then developed using a tri-level development method to print an image comprising two colours (S408).

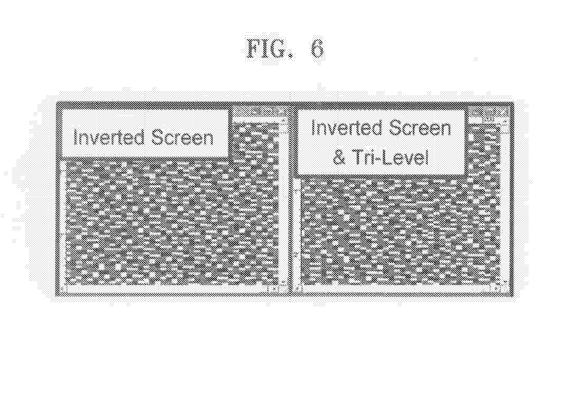

Figure 5 shows the first and second screens in the halftone processing method of Figure 4. Referring to Figure 5, a first screen 52 and a second screen 54 have the same size of 3x3 and the numbers at corresponding positions in the first and second screens 52 and 54 are in a complementary relationship of a representative level. The representative level signifies a resolution of a colour. For example, in Figure 5, a colour is represented by eight levels signified by the number range 0-7. The numbers at the upper left corners of the first and second screens 52 and 54 are "0" and "8" which satisfy the relationship of being complements of eight. Likewise, the numbers "1" and "7" at the top center positions of the first and second screens 52 and 54 satisfy the complementary relationship.

As the first screen 52 and the second screen 54 have a complementary relationship, the first dot pattern and the second dot pattern generated by the halftone processing have a complementary relationship as well. Thus, the generation of overlapped dots by the halftone processing is fundamentally prevented and the quality of a printed image is improved compared to the conventional tri-level development method.

In halftone processing of yellow and black for a first developing system, a yellow screen is made by applying a complementary relationship relative to a black screen. In halftone processing of magenta and cyan for a second developing system, a magenta screen is made by applying a complementary relationship relative to a cyan screen. Then, dot patterns are produced in which the overlap of dots between yellow and black, and magenta and cyan, is reduced because of the characteristics of the screens having a complementary relationship. When the dot patterns with the reduced dot overlap are output in the tri-level development method, the loss of information due to the tri-level development method is reduced.

Figure 6 shows an image that is halftone processed using the screen according to an exemplary embodiment of the present invention and an image that is obtained by printing the halftone processed image in the tri-level development method. Referring to Figure 6, the left image is one that is halftone processed according to an exemplary embodiment of the present invention and the right image is one obtained by printing the halftone processed image in the tri-level development method. Referring to Figure 6, when the halftone processed image is printed in the tri-level development method, not only an undesired pattern is not generated compared to the case in which the image that is halftone processed according to conventional technology is printed in the tri-level development method, but also the generation of the unnecessary information is reduced, so that the quality of an image is greatly improved.

For example, the colour of a blue sky is a bright blue represented by a small number of cyan dots and a small number of magenta dots. According to the characteristic of the tri-level development method, a cyan colour and a magenta colour cannot be printed by being overlapped upon each other. In the conventional halftone development method, a cyan colour and a magenta colour are overlapped to produce a blue colour. When the colours are overlapped to represent a certain colour, a great deal information loss is made during the tri-level development. In contrast, when a dot pattern is produced by using the screens having a complementary relationship, the generation of a blue colour produced as a cyan colour and a magenta colour via overlapping is reduced so that information loss during the tri-level development is reduced.

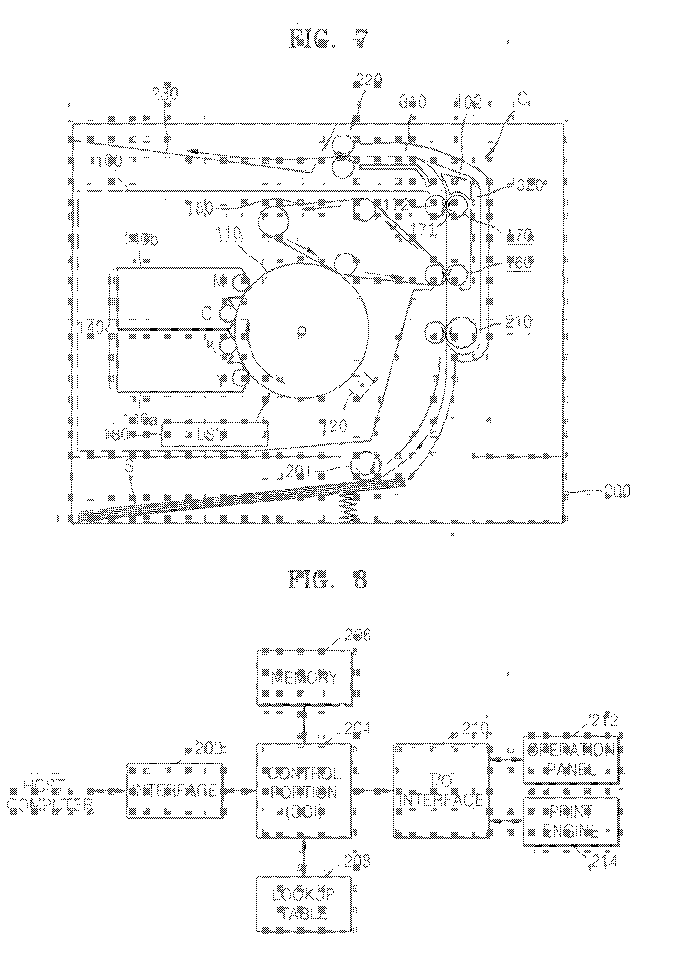

Figure 7 is a view showing the physical construction of a tri-level development type laser printer employing the halftone processing method according to an exemplary embodiment of the present invention. Referring to Figure 7, the laser printer comprises a print unit 100, a paper output path 310, a paper reverse path 320, a paper feed cassette 200, a pickup roller 201 for advancing paper from the stack 'S,' and a feed roller 210.

The print unit 100 includes a charger 120, a light scanning unit (LSU) 130, a photosensitive drum 110, a developing portion 140 containing developer, a transfer belt 150, a transfer roller 160, and a fixer 170, and print an image on a print paper in an electrophotographic method. The developing portion 140 comprises a first developing unit 140a for black (K) and yellow (Y) and a second developing unit 140b for magenta (M) and cyan (C).

In the image forming process by the print unit 100 configured as above, the charger 120 supplies electrostatic charge to the photosensitive drum 100 so that the surface of the photosensitive drum 100 is charged to a uniform electrostatic potential. In an exposure process, the LSU 130 scans light corresponding to a yellow dot pattern and a black dot pattern, for example, onto the photosensitive drum 110.

Accordingly, a yellow electrostatic latent image and a black electrostatic latent image are formed due to a relative difference in the electric potential between a portion that is scanned by the light and a portion that is not scanned by the light. The yellow electrostatic latent image is charged positively while the black electrostatic latent image is charged negatively.

The first developing unit 140a supplies the developer to these yellow and black electrostatic latent images to form yellow and black toner images. These yellow and black toner images are transferred to the transfer belt 150. When the yellow and black toner images are completely transferred to the transfer belt 150, magenta and cyan toner images are formed by the second developing unit 140b using the above method and transferred to the transfer belt 150 to be overlapped with each other. Thus, a complete colour toner image is formed on the transfer belt 150. The colour toner image is transferred to the print paper passing between the transfer belt 150 and the transfer roller 160. The fixer 170 applies heat and pressure to the colour toner image so that a complete colour image is obtained. The fixer 170 includes a heat roller 171 and a pressure roller 172.

The paper output path 310 connects an outlet 102 of the print unit 100 and an output device and forms a path along which a printed-paper is output toward an output tray 230. The outlet 102 of the print unit 100 is located at an output side of the fixer 170. In the present exemplary embodiment, a pair of output rollers 220 rotating by being engaged with each other is used as the output device.

The paper reverse path 320 is a path along which the print paper with an image printed on one side thereof is reversed and routed back to the print unit 100 so that an image can be printed on the rear surface of the print paper. The paper reverse path 320 branches from the paper output path 310 and extends to the feed roller 210 that supplies print paper to the print unit 100.

Figure 8 is a block diagram of the construction of the printer of Figure 7. Referring to Figure 8, the printer includes an interface 202, a control portion 204, a memory 206, a lookup table 208, an I/O interface 210, an operation panel 212, and a print engine 214.

The operation panel 212 includes a plurality of keys for inputting various commands by a user and a display device for displaying information on the operation of the printer for the user. The interface 202 couples a signal output from an external host computer (not shown), for example, various commands and data to be printed (hereinafter, referred to as the print data) and a signal output to the host computer, for example, a print state signal. The print data provided from the host computer is buffered in the memory 206.

The control portion 204 communicates with the host computer through the interface 202 and controls the print engine 214 according to the print data and the various commands output from the host computer and the operation panel 212. In particular, the control portion 204 functions as a graphic display interface to perform the halftone processing for generating dot patterns from an input video signal. In one exemplary embodiment, the control portion 204 comprises a microprocessor.

The memory 206 stores setting information set through the operation panel 212 under the control of the control portion 204 and the print data output from the host computer. The memory 206 can store an execution program of the control portion 204, in particular, the halftone processing method, as shown in Figure 4.

The I/O (input/output) interface 210 is connected between the control portion 204 and the operation panel 212 and the print engine 214 and provides an interface for I/O signals to the control portion 204. The print data is transmitted to the print engine 214 through the I/O interface 210. The print engine 214 for hard copying the print data comprises various mechanical parts for transfer and print of the print paper and performs printing under the control of the control portion 204.

As described above, the first dot pattern and the second dot pattern, generated from the video signal having two colours, are prevented from being overlapped with each other. Thus, when the first and second dot patterns are printed in the tri-level development method, the loss of colour information or the generation of empty information is prevented so that the quality of an image is improved.

While the present invention has been particularly shown and described with reference to certain exemplary embodiments thereof, it will be understood by those of ordinary skill in the art that various changes in form and detail may be made therein which use the principles of the present invention as set out in the appended claims.

## Claims

1. A method of processing halftone images for a video signal having at least two colours, the method comprising:
generating a first dot pattern by applying halftone processing to the video signal using a first screen, the first dot pattern corresponding to a first colour; and
generating a second dot pattern by applying halftone processing to the video signal using a second screen, the second dot pattern corresponding to a second colour;
wherein the first and second screens have a complementary relationship.

2. The method as claimed in claim 1, further comprising printing the first and second patterns using a tri-level development method.

3. A method according to claim 1 or 2, wherein the first and second screens have equal sizes and have threshold values at corresponding positions that are complements of each other.

4. A computer program containing computer-executable instructions for enabling the method of any of claims 1 to 3 to be performed when run on a computer.

5. An image forming apparatus configured to process halftone images for a video signal having at least two colours, the apparatus comprising:
an interface for coupling signals to the image forming apparatus;
a control portion for conducting communications via the interface and controlling the image forming apparatus;
a memory for storing information comprising print data and setting commands;
an I/O interface; and
an operation panel for inputting various commands and data, the operation panel being coupled to the control portion through the I/O interface; and a print engine responsive to commands from the control portion, being coupled thereto via the I/O interface,
wherein the image forming apparatus is configured to generate a first dot pattern by applying halftone processing to the video signal using a first screen, the first dot pattern corresponding to a first colour, and generate a second dot pattern by applying halftone processing to the video signal using a second screen, the second dot pattern corresponding to a second colour, the first and second screens having a complementary relationship.

6. A method of printing an image, comprising:
generating a halftone image from a video signal in which the halftone image contains first and second colour information representing first and second colours in which the first and second colour information does not overlap;
printing the image by applying a tri-development printing method to the generated halftone image.

7. A method according to claim 6, in which the halftone image is generated using a first halftone screen corresponding to the first colour and a second halftone screen corresponding to the second colour, wherein the first and second halftone screens have a complementary relationship.
